# EUROPÄISCHE PATENTANMELDUNG

(11) **EP 3 199 056 A1**
(43) Veröffentlichungstag der Anmeldung: **02.08.2017**
(21) Anmeldenummer: 17150818.7
(22) Anmeldetag: 10.01.2017
(51) Int. Cl.: A45F 5/00, A45F 3/00, G02B 23/16

(54) **ANSCHLUSSADAPTER**

(30) Priorität: 27.01.2016 DE 202016100364 U
(71) Anmelder: Geller, Wolfgang-Peter, 21376 Garlstorf (DE)
(72) Erfinder: Geller, Wolfgang-Peter, 21376 Garlstorf (DE)
(74) Vertreter: Raffay & Fleck

(57) **Zusammenfassung**

Offenbart wird ein Anschlussadapter (1) zum Verbinden eines Trageriemens (R) mit einem Fernglas mit einem Adapterkörper (2), der einen ersten Verbindungsabschnitt (3), in dem eine Stativschraube (4) zum Verbinden mit einer Stativbuchse relativ zu dem Adapterkörper (2) verdrehbar und mit einer Schraubengewindeachse entlang einer ersten Richtung orientiert angeordnet ist, und einen zweiten Verbindungsabschnitt (6) mit Mitteln zum Verbinden mit einem an dem Trageriemen angeordneten Anschlussstück aufweist, wobei die Verbindungsabschnitte (3; 6) in einer Richtung senkrecht zu der Schraubengewindeachse um ein erstes Abstandsmaß und in einer Richtung parallel zu der Schraubengewindeachse um ein zweites Abstandsmaß zueinander versetzt sind. Dieser Anschlussadapter zeichnet sich dadurch aus,
iii. dass der zweite Verbindungsabschnitt (6) ein mit einer parallel zu der Schraubengewindeachse verlaufenden oder relativ zu dieser um maximal 20° geneigten Gewindeachse gebildetes Innengewinde (7) zur Aufnahme einer Stativschraube aufweist, oder
iv. dass der zweite Verbindungsabschnitt ein Kopplungselement aufweist.

So kann auch für mitzuführende Ferngläser der Vorteil nutzbar gemacht werden, der durch bekannte, quer über den Oberkörper zu tragende Trageriemen für Kameras gegeben ist, indem solche Trageriemen in Verbindung mit einem erfindungsgemäßen Adapter auch für das Mitführen von Ferngläsern verwendet werden können.

## Beschreibung

Die Erfindung betrifft einen Anschlussadapter zum Verbinden eines Trageriemens mit einem Fernglas, mit einem Adapterkörper, der einen ersten Verbindungsabschnitt, in dem eine Stativschraube zum Verbinden mit einer Stativbuchse relativ zu dem Adapterkörper verdrehbar und mit einer Schraubengewindeachse entlang einer ersten Richtung orientiert angeordnet ist, und einen zweiten Verbindungabschnitt mit Mitteln zum Verbinden mit einem an dem Trageriemen angeordneten Anschlussstück aufweist, wobei die Verbindungsabschnitte in einer Richtung senkrecht zu der Schraubengewindeachse um ein erstes Abstandsmaß und in einer Richtung parallel zu der Schraubengewindeachse um ein zweites Abstandsmaß zueinander versetzt sind.

Ferngläser werden häufig von ihren Nutzern auf Wanderungen oder beim Begehen der Natur, zum Beispiel für die Beobachtung von Vögeln oder bei der Ausübung der Jagd, mitgeführt. Da die Ferngläser hierbei nicht permanent in der Hand gehalten oder gar gebraucht werden, werden sie an Trageriemen um den Hals aufgehängt. Hierfür haben die Ferngläser entsprechende Anschlüsse seitlich an den jeweiligen Spektivrohren, typischerweise Ösen, an denen jeweils ein Ende des Trageriemens festgelegt ist. Diese Art und Weise, Ferngläser zu tragen, ist althergebracht. Entsprechende Bezugnahmen im Stand der Technik finden sich zum Beispiel in der DE 6750210 U und der DE 8234999 U1. Diese Art des Mitführens von Ferngläsern mittels eines an zwei Seiten des Fernglases jeweils mit einem Ende festgelegten Trageriemens, der eben in klassischer Weise um den Hals getragen wird, ist bis heute die gängige Art und Weise, wie Ferngläser getragen werden. Auch zuletzt wird an dieser Art und Weise noch festgehalten, es werden lediglich Neuerungen hinsichtlich der Befestigung des Trageriemens an den beiden seitlichen Positionen des Fernglases gesucht, wie zum Beispiel gemäß der DE 20 2015 003 640 U1.

Für Kameras, die ursprünglich ebenfalls weitgehend ausschließlich an mit zwei Enden an jeweils einer Seite des Kameragehäuses an dort vorhandenen Ösen angeschlagenen Trageriemen um den Hals mitgeführt wurden, ist vor einigen Jahren ein neues Tragekonzepts vorgeschlagen worden, welches einen quer über den Torso zu tragenden, als geschlossene Schlaufe ausgebildeten Trageriemen vorsieht, der mit einem über den Riemen gleitend verschiebbaren Anschlussstück versehen ist, über welches der Trageriemen mit der Stativschraubenbuchse im Kameragehäuse oder in einem mit der Kamera verbunden Objektiv verbunden werden kann. Dieses Prinzip ist beschrieben in der WO 2008/131135 A1. Entsprechende Trageriemen sind seit etwa dem Jahr 2007 auch am Markt erhältlich. Wie in der WO 2008/131135 A1 beschrieben, gibt es ganz unterschiedliche Möglichkeiten, das Anschlussstück des Trageriemens mit der Stativschraubenbuchse am Kameragehäuse zu verbinden. Hierfür kann zum Beispiel an dem Trageriemen unmittelbar entlang dessen Längsrichtung verschiebbar befestigt eine Stativschraube vorgesehen sein, wie dies zum Beispiel in Figur 7 der bezeichneten Druckschrift gezeigt ist. Es gibt hier aber auch Lösungen beschrieben, in denen ein gesondertes Anschlussteil einer Stativschraube mit einer daran festgelegten Halteöse in die Stativschraubenbuchse im Kameragehäuse eingeschraubt ist, welches Anschlussteil dann über einen Karabinerhaken, der an dem Trageriemen festgelegt ist und mit der Öse gekoppelt wird, mit dem Karabinerhaken und somit dem Trageriemen verbunden werden kann. Ein solches Beispiel ist in Figur 18 der Druckschrift gezeigt. Inzwischen sind für derartige Trageriemensysteme ganz unterschiedliche Anschlussstücke vorgeschlagen worden, so zum Beispiel auch in der DE 20 2012 104 214 U1. Allerdings befassen sich diese Trageriemen Systeme bislang ausschließlich mit der Erleichterung des Tragens von Film- oder Fotoausrüstung, es hat noch keine Versuche gegeben, diese grundsätzliche Art des Mitführens schwerer, im Gebrauch vor das Gesicht zu haltender Gegenstände an einem in einer Schlaufe quer über den Torso geführten Riemen auch auf Ferngläser zu übertragen.

Dabei haben Ferngläser häufig ebenfalls eine für Stativschrauben genormte Schraubbuchse, die meist in einem zentralen Achsenabschnitt stirnseitig angeordnet ist, an welchem die beiden Linsenrohre, die zusammen das Fernglas bilden, relativ zu verschwenkbar angeordnet sind. Diese Stativschraubbuchse ist dafür vorgesehen, das Fernglas vermittels eines entsprechenden Adapterstückes mit einem herkömmlichen, für Fotokameras oder Filmapparate verwendeten Stativ, zum Beispiel einem Dreibeinstativ, verbinden zu können. Um dies zu tun, wird ein spezielles Adapterstückes vorgesehen, welches in einem ersten Verbindungsabschnitt eine Stativschraubbuchse aufweist, die in einer ersten Gewindelängsrichtung geführt ist und welches einen zweiten Verbindungabschnitt mit einer Stativschraube aufweist, deren Gewindelängsachse im Wesentlichen senkrecht zu der Gewindelängsrichtung der Stativschraubbuchse liegt. Dieses Adapterstück kann auf die Stativplatte eines herkömmlichen Stativs aufgeschraubt und dann mit dem Fernglas verbunden werden. Diese Möglichkeit wird häufig genutzt, um eine exakte Ausrichtung des Sehfeldes des Fernglases auf einen zu beobachtenden Bereich zu erhalten und zugleich bei einer lange andauernden Beobachtung das Fernglas nicht in ermüdender Weise ständig in der Hand halten zu müssen. Zum Beispiel Vogelbeobachter nutzen diese Art der Festlegung eines Fernglases auf einem Stativ. Beschrieben ist ein entsprechendes Adapterstück zum Beispiel in der JP 2002072104 A. Ein solches Adapterstückes eignet sich allerdings ausschließlich für die Festlegung eines Fernglases an einem herkömmlichen Stativ, kann insbesondere aufgrund der oben beschriebenen und besonderen Ausrichtung der genannten Achsen (der Gewindelängsrichtung der Stativschraube und der Gewindelängsachse) nicht in anderer Weise eingesetzt und verwendet werden.

Vor dem Hintergrund des Standes der Technik und insbesondere im Wissen um die mit Fotoapparaten und Filmkameras für deren Transport und Mitführen mit einem Tragesystem, wie in der WO 2008/131135 A1 bestehenden Vorteile hat sich der Erfinder nun Gedanken gemacht, ob es nicht auch möglich sein kann, entsprechende Vorteile nicht nur in Bezug auf Kameras, sondern eben auch für mitzuführende Ferngläser nutzbar zu machen, die, abhängig von Vergrößerung und Lichtstärke, ebenfalls ein nicht unerhebliches Gewicht aufweisen können und deren Tragen in klassischer Weise mit einem Halsriemen entsprechend ermüdend und auf Dauer unangenehm sein kann.

Als Ergebnis entsprechender Überlegungen hat der Erfinder einen neuartigen Anschlussadapter entwickelt, der durch seine besondere Ausgestaltung die Verbindung eines wie in der WO 2008/131135 A1 beschriebenen Trageriemens mit einem Fernglas und dort mit dessen Stativgewindebuchse ermöglicht. Ein solcher Anschlussadapter ist mit seinen besonderen Merkmalen im Anspruch 1 bezeichnet. Vorteilhafte Weiterbildungen desselben sind in den abhängigen Ansprüchen 2 bis 12 konkretisiert.

Erfindungsgemäß hat demnach ein Anschlussadapter zum Verbinden eines Trageriemens mit einem Fernglas einen Adapterkörper. Dieser Adapterkörper verfügt über einen ersten und einen zweiten Verbindungsabschnitt. In dem ersten Verbindungsabschnitt ist eine Stativschraube zum Verbinden mit einer Stativgewindebuchse des Fernglases relativ zu dem Adapterkörper verdrehbar und mit einer Schraubengewindeachse entlang einer ersten Richtung orientiert angeordnet. Der zweite Verbindungsabschnitt weist Mittel zum Verbinden mit einem an dem Trageriemen angeordneten Anschlussstück auf. Die Verbindungsabschnitte sind in einer Richtung senkrecht zu der Schraubengewindeachse um ein erstes Abstandsmaß und in einer Richtung parallel zu der Schraubengewindeachse um ein zweites Abstandsmaß zueinander versetzt. Dieser Anschlussadapter zeichnet sich nun durch eine besondere Ausgestaltung des zweiten Verbindungsabschnittes aus, wobei hier zwei Alternativen angegeben und möglich sind. So kann der zweite Verbindungsabschnitt erfindungsgemäß einerseits ein mit einer parallel zu der Schraubengewindeachse verlaufenden oder relativ zu dieser maximal 45°, vorzugsweise maximal 20°, in der Regel bis maximal 15°, geneigten Gewindeachse gebildetes Innengewinde zur Aufnahme einer Stativschraube aufweisen. Alternativ kann der zweite Verbindungsabschnitt auch ein Kopplungselement zum lösbaren Verbinden mit einem entsprechenden Gegenstück an einem Anschlussstück eines Trageriemens. Ein solches Kopplungselement kann z.B. die Form einer Öse aufweisen, wobei eine Öse allgemein durch eine vollständig umschlossene Durchbruchöffnung gebildet ist, also auch durch z.B. eine Bohrung oder Durchführung durch den Adapterkörper realisiert sein kann. Es kommen aber auch Schnappverbinder, Kugelkuppler und dergleichen in Frage; die Art der Kopplung ist dabei nicht beschränkt.

Die beiden genannten Alternativen dienen demselben Zweck, nämlich dem Bilden einer Anbringungsmöglichkeit eines Fernglases an einem Trageriemen nach Art des in der WO 2008/131135 A1 offenbarten Riemens, ergeben sich allein aufgrund der unterschiedlichen Ausgestaltungen des Anschlussstücks des dort offenbarten Trageriemens. Wenn dieser nämlich als Anschlussstück eine mit dem Riemen fest verbundene Stativschraube aufweist, so muss der zweite Verbindungsabschnitt entsprechend der vorstehend zuerst genannten Alternative ein Innengewinde zur Aufnahme dieser Stativschraube aufweisen. Wenn allerdings das Anschlussstück an den Trageriemen ein anderes Gegenstück zum Verbinden mit einem Kopplungselement aufweist, so kann in dem zweiten Verbindungsabschnitt eben ein solches Kopplungselement angeordnet sein. Weist das Anschlussstück also z.B. einen Karabinerhaken oder ein ähnlich gebildetes Verbindungselement zum lösbaren Verbinden mit einer Öse auf, so kann in dem zweiten Verbindungsabschnitt das Kopplungselement als eine Öse gebildet sein. Das Kopplungselement kann insbesondere fest und sogar einstückig mit dem Adapterkörper verbunden sind. Selbstverständlich kann aber der zweite Verbindungsabschnitt auch mit dem Innengewinde versehen sein, in das dann eine wie in der WO 2008/131135 A1 gezeigte spezielle Stativschraube eingeschraubt werden kann, die ein Kopplungselement, z.B. eine Öse für die Verbindung mit einem Karabiner oder dergleichen am Anschlussstück des Trageriemens, aufweist.

Entscheidend ist, wenn in dem zweiten Verbindungsabschnitt ein Gewinde vorgesehen ist, insbesondere die Ausrichtung von dessen Gewindeachse. Denn für ein bequemes Tragen des Fernglases an einem Trageriemen, wie er in der WO 2008/131135 A1 gezeigt und offenbart ist, ist von wesentlicher Bedeutung, dass das Fernglas mit einer Ausrichtung der Linsenrohre möglichst parallel zur Körperlängsachse entlang des Körpers, ggf. leicht verkippt, hängt. Hierzu kann der Anschlussadapter nicht in einer Weise gebildet sein, wie es die für ein Festlegen von Ferngläsern an Stativen bekannten Adapter sind, mit den senkrecht zueinander ausgebildeten Schraub- bzw. Gewindeachsen. Hier ist vielmehr eine parallele oder annähernd parallele (Abweichungen von maximal 45° können toleriert werden) Ausrichtung zu bevorzugen. Je geringer die Abweichung von der Parallelität ist, umso günstiger ist in der Regel das Verhalten. Insoweit wird eine Abweichung von maximal 20°, insbesondere max. 15°, insbesondere maximal 10°, noch weiter bevorzugt von maximal 5° - je nach Art des anzuschließenden Fernglases, besonders bevorzugt sein.

Zudem muss das Fernglas an einem möglichst nahe an dessen Schwerpunkt angeordneten Anschlagpunkt, mit Vorteil an einem etwas versetzt zu dem Schwerpunkt angeordneten (in Trageposition des Fernglases oberhalb desselben liegenden) Anschlagpunkt, an dem Trageriemen angeschlagen, mit diesem verbunden werden. Ansonsten würde sich nämlich permanent ein Kippmoment ausbilden, so dass das an dem Riemen befestigte Fernglas, welches dann seitlich am Körper des Tragenden herabhängt, aufgrund einer entsprechend Verkippung gegen den Körper, insbesondere die Hüfte oder den oberen Beinbereich drückt bzw. beim Laufen dort anschlägt. Um eine solche schwerpunktnahe Positionierung des Anschlagpunktes, also letztlich des zweiten Verbindungsabschnitts, zu erreichen, sind das erste Abstandsmaß und das zweite Abstandsmaß des Versatzes zwischen erstem und zweiten Verbindungsabschnitt entsprechend zu wählen.

Im Falle eines im zweiten Verbindungsabschnitt ausgebildeten Kopplungselements, wie z.B. einer Öse, ist dessen Orientierung an sich nicht von solch entscheidender Bedeutung, da in Verbindung mit einem ein Gegenstück aufweisenden Anschlussstück, z.B. einem Karabinerhaken oder einem ähnlichen lösbaren Befestigungselement, hier eine sehr gelenkige Verbindung entstehen kann, die eine Ausrichtung in optimaler geometrischer Lage zueinander allein aufgrund der Gewichtskraft des Fernglases ermöglicht. Dennoch können selbstverständlich bei der Festlegung der Orientierung des Kopplungselementes Überlegungen hinsichtlich einer optimalen Position für die Verlagerung des Anschlagpunktes möglichst nah an den Schwerpunkt des Fernglases heran und für eine Aufhängung des Fernglases mit dessen Längsachse im Wesentlichen parallel zu Körperlängsrichtung berücksichtigt werden, um eine ausgeglichene und an sich ruhige und positionsgetreue Lage des an dem Trageriemen mittels des Adapters festgelegten Fernglases zu erhalten.

Wenn das Fernglas nun mit dem erfindungsgemäßen Adapter an dem quer über den Torso zu tragenden Trageriemen, wie er in der WO 2008/131135 A1 beschrieben ist, festgelegt ist, so kann das Fernglas ausgehend von einer Trageposition seitlich im Bereich der Hüfte des Nutzers sehr schnell ergriffen, mithilfe des an dem Trageriemen verschiebbaren Anschlussstückes den Trageriemen entlang schräg nach oben entlang geführt und vor das Gesicht gebracht werden, um dann durch das Fernglas hindurch ein Objekt vergrößert zu beobachten. Will der Nutzer nun weiter voranschreiten, so lässt er das Fernglas zurückgleiten, führt es zurück in die Trageposition seitlich am Körper. In dieser Position ist das Tragen des Fernglases auch dann, wenn dieses ein spürbares Gewicht hat und wenn dieses Tragen über längere Zeiträume erfolgt, durchaus angenehm. Um ein hin und her Bewegen des Fernglases beim Laufen zu minimieren, kann hier noch eine zusätzliche Arretierung, zum Beispiel am Gürtel des Nutzers, vorgesehen sein. Die Anbindung des Fernglases und die Festlegung desselben an dem besonderen Trageriemen werden erst durch den erfindungsgemäßen und wie vorstehend beschrieben besonders gestalteten Anschlussadapter ermöglicht.

Da die am Fernglas wie beschrieben an einer Stirnseite des zentralen Achsenteils ausgebildete Gewindebuchse gerade nicht im Bereich des Schwerpunktes des Fernglases liegend angeordnet ist, kommt, wie bereits erwähnt, dem Versatz der Verbindungsabschnitte in den genannten Richtungen, nämlich einer senkrecht zu der Schraubengewindeachse der Stativschraube im ersten Verbindungsabschnitt und einmal parallel dazu eine besondere Bedeutung zu. Über die Wahl dieser Abstandsmaße wird, wie schon erläutert, der im zweiten Verbindungsabschnitt gelegene Anschlagpunkt, an dem der Trageriemen mit dem Fernglas verbunden wird, möglichst nah an den Schwerpunkt des Fernglases herangeführt. Entsprechend ist das Maß dieser Versatzabstände angepasst an ein jeweiliges Fernglasmodel zu wählen. Dabei kann das erste Abstandsmaß Werte zwischen 5 mm und 100 mm, kann das zweite Abstandsmaß Werte zwischen 10 mm und 500 mm einnehmen. Wie erläutert hängt die genaue Wahl der Werte für die genannten Abstandsmaße von der Geometrie des Fernglases ab, das konkret an dem Trageriemen festgelegt werden soll. Das erste Abstandsmaß wird dabei im Wesentlichen bestimmt durch einen Abstand der Gewindeachse der in dem Fernglas angeordneten Stativschraubgewindebuchse von einer Ebene, entlang derer der Adapterkörper geführt werden kann, ohne mit weiteren Teile des Fernglases, wie z.B. einem Einstellrad für die Entfernungseinstellung, zu kollidieren. In der Regel wird dabei angestrebt werden, den Adapterkörper möglichst nahe an dem Fernglas in dessen Längsrichtung zu führen, um so einen Anschlagpunkt nahe dem Schwerpunkt des Fernglases zu realisieren. Der Wert für das zweit Abstandsmaß hängt dann insbesondere von der Baulänge des Fernglases ab.

Der Anschlussadapter kann mit einem Adapterkörper grundsätzlich durchgehend einstückig gebildet sein. Er kann aber auch aus wenigstens zwei Teilkörpern gebildet sein, von denen ein erster den ersten Verbindungsabschnitt und ein zweiter den zweiten Verbindungsabschnitt trägt. Die zwei Teilkörper sind dann in wenigstens zwei unterschiedlichen Positionen miteinander verbindbar, um so wenigstens eines der Abstandsmaße, erstes Abstandsmaß bzw. zweites Abstandsmaß, vorzugsweise jedenfalls das zweite Abstandsmaß, variierbar einstellen zu können. Hierüber kann ein universeller Anschlussadapter erhalten werden, der an unterschiedliche Fernglastypen angepasst werden und mit dem durch entsprechendes Verstellen der Relativpositionen der zwei Teilkörper zueinander den zweiten Verbindungsabschnitt möglichst nah an den Schwerpunkt des jeweiligen Fernglases herangeführt werden kann. Auch ist es grundsätzlich denkbar unterschiedlich geformte erste Teilkörper und/oder unterschiedlich geformte zweite Teilkörper vorzusehen, die dann wahlweise zusammengestellt und zu einem an das spezifisch festzulegende Fernglas angepassten Adapterkörper verbunden werden können.

Wird der Adapterkörper hingegen einstellig ausgebildet, so werden zum Bedienen eines Marktes mit unterschiedlich geformten Ferngläsern mehrere, hinsichtlich der Abstandsmaße, erstes Abstandsmaß und/oder zweites Abstandsmaß, unterschiedlich dimensionierte Anschlussadapter angeboten werden, so dass ein Anwender sich einen für sein Fernglas passenden Anschlussadapter auswählen kann.

Gemäß einer vorteilhaften Weiterbildung der Erfindung kann bei einem erfindungsgemäßen Anschlussadapter vorgesehen sein, dass der erste Verbindungsabschnitt in einem ersten ebenen Plateaubereich angeordnet ist und dass der zweite Verbindungsabschnitt in einem zweiten ebenen Plateaubereich angeordnet ist, wobei die Plateaubereiche in ihrer jeweiligen ebenen Erstreckung im Wesentlichen parallel zueinander orientiert sind. Dies ist insbesondere dann von Vorteil, wenn der zweite Verbindungsabschnitt das Innengewinde aufweist. Denn die Plateaubereiche können dann Anlageflächen bilden für die Anlage um die Stativgewindebuchse im Fernglas herum und für eine Stativgewindeschraube, die in das Innengewinde im zweiten Verbindungsabschnitt eingeschraubt ist. Wenn bewusst eine Verkippung des mit dem Anschlussadapter an einem Trageriemen festgelegten und seitlich am Körper getragenen Fernglases angestrebt wird, um z.B. zu erreichen, dass sich das Fernglas mit einem in der Trageposition unten gelegenen Ende leicht an den Körper des Träger anschmiegt, kann hier auch ein gegenüber einer exakten Parallelität der Plateaus bewusst gewählter Winkelversatz einbezogen werden. Nicht allein für eine Ausgestaltung mit einer in den zweiten Verbindungsabschnitt einzuschraubenden Stativgewindeschraube, sondern auch dann, wenn im Bereich des zweiten Verbindungsabschnittes ein Kopplungselement, z.B. eine Öse, gebildet ist, kann die vorstehend beschriebene Ausgestaltung vorteilhaft sein.

Um den um das erste Abstandsmaß und das zweite Abstandsmaß gebildeten Versatz zwischen dem ersten Verbindungsabschnitt und dem zweiten Verbindungsabschnitt auszubilden, kann die Oberfläche des Adapterkörpers zwischen dem ersten und der zweiten Verbindungsabschnitt insbesondere einen in einem Querschnitt S-förmig gekrümmten Verlauf aufweisen. Grundsätzlich sind dabei aber auch andere Formen denkbar, wobei der S- förmige Verlauf produktionstechnisch, aus ästhetischen Gründen und auch im Hinblick auf eine Kraftübertragung jedoch zu bevorzugen ist.

Der erfindungsgemäße Anschlussadapter kann insbesondere einen bandförmigen, flach gebildeten Adapterkörper aufweisen. Ein solcher wirkt vergleichsweise leicht, kann mit einem geringen Materialeinsatz und damit kostengünstig hergestellt werden. Ebenso gut kann aber auch eine kompakte, voluminöse Bauform gewählt werden. Dies kann z.B. unter Berücksichtigung von Überlegungen zur benötigten Stabilität des Anschlussadapters bzw. seines Adapterkörpers erforderlich sein.

Als Material für den Adapterkörper kommen insbesondere Kunststoff, aber auch Metall, in Betracht. Ebenso können aber auch andere Materialien verwendet werden, wie z.B. Holz.

Weiterhin kann vorgesehen sein, dass die Stativschraube an dem ersten Verbindungsabschnitt an dem Adapterkörper unverlierbar festgelegt ist. Dies kann zum Beispiel dadurch erreicht sein, dass die Stativschraube durch eine entsprechende Bohrung in dem ersten Verbindungsabschnitt hindurch geführt und auf der anderen Seite auf die Stativschraube ein den Durchmesser der Bohrung überragendes Halteelement aufgesetzt ist. Dieses Halteelement kann zum Beispiel ein Gummiring sein, der zugleich auch dem Ausüben einer der Einschraubrichtung entgegen gerichteten Klemmkraft dient, so dass die Gewindeschraube in der Gewindebuchse des Fernglases sicher und fest verschraubt ist, sich nicht versehentlich lösen kann. "Unverlierbar" bedeutet in diesem Zusammenhang nicht etwa, dass nicht durch Anwendung ausreichender Kraft die Stativschraube von dem ersten Verbindungsabschnitt gelöst werden kann. Vielmehr bedeutet "unverlierbar" in diesem Zusammenhang lediglich, dass im normalen Gebrauch die Stativschraube an dem ersten Verbindungsabschnitt festgelegt verbleibt, sich von diesem nicht lösen kann.

Für einen erfindungsgemäßen Anschlussadapter kann, wenn dieser mit dem Innengewinde in zweiten Verbindungsabschnitt gebildet ist, von Vorteil sein, wenn dieses Innengewinde den zweiten Verbindungsabschnitt vollständig durchragt und in einer solchen Weise von beiden Seiten her offen zugänglich ist, dass eine Stativschraube von beiden Seiten her, also wahlweise von einer der Seiten her, in dieses eingeschraubt werden kann. Die Einschraubrichtung wird dabei in der einen Richtung nach Art eines Rechtsgewindes, in der anderen Richtung nach Art eines Linksgewindes liegen. Auf diese Weise kann der Anwender entscheiden, von welcher Seite her er den Anschlussadapter kontaktieren will. So kann er insbesondere die Richtung festlegen, in der das Fernglas in der Trageposition hängt. Soll dieses mit der Okularseite nach unten hängen, oder wünscht er eine Herabhängen des Fernglases mit der Objektivseite nach unten, so muss er lediglich die Stativschraube von der passenden Seite her in das Innengewinde des zweiten Verbindungsabschnitts einschrauben.

Wie sich aus voranstehenden Ausführungen und Erläuterungen ergibt, kann mit einem erfindungsgemäß gebildeten Anschlussadapter auch für das Tragen und Mitführen von Ferngläsern auf solche Trageriemen und -systeme zurückgegriffen werden, wie sie in der WO 2008/131135 A1 beschrieben sind und sich für das Tragen von Kameras bewährt haben. Insbesondere können mit den erfindungsgemäß gebildeten Anschlussadaptern Inhaber von derartigen Trageriemen, die diese zum Tragen von Kameras erworben haben, diese im Bestand befindlichen Trageriemen auch zum Mitführen von Ferngläsern einsetzen, also in einem erweiterten Funktionsbereich nutzen.

Weitere Vorteile und Merkmale der Erfindung ergeben sich aus der nachfolgenden Beschreibung von Ausführungsbeispielen. Dabei zeigen:
- Fig. 1: ein erstes Ausführungsbeispiel eines erfindungsgemäßen Anschlussadapters in einer dreidimensionalen Ansicht von der Seite;
- Fig. 2: eine Seitenansicht des Anschlussadapters nach Fig. 1;
- Fig. 3: den Anschlussadapter des in den Fig. 1 und 2 gezeigten Ausführungsbeispiels, wie er an einem Fernglas festgelegt ist;
- Fig. 4: das Fernglas mit dem daran festgelegten Anschlussadapter gemäß Fig. 3, wie es an einem quer über den Torso zu tragenden Trageriemen festgelegt und in einer Transporthaltung gelegen ist;
- Fig. 5: in drei Ansichten a) bis c) ein zweites Ausführungsbeispiel eines erfindungsgemäßen Anschlussadapters;
- Fig. 6: ein Fernglas mit daran festgelegtem Anschlussadapter gemäß Fig. 5, wie es an einem quer über den Torso zu tragenden Trageriemen festgelegt und in einer Transporthaltung gelegen ist;
- Fig. 7: in einer Seitenansicht ein drittes Ausführungsbeispiel eines erfindungsgemäßen Anschlussadapters in einer dem ersten, in Fig. 1 gezeigten Ausführungsbeispiel vergleichbaren Gestaltung, allerding mit zweigeteiltem und variabel verstellbarem Adapterkörper;
- Fig. 8: ein einer Seitenansicht den Anschlussadapter nach Fig. 7 mit einem in anderer Positionierung der Teilkörper gebildeten Adapterkörper;
- Fig. 9: in zwei Darstellungen a) und b) den Anschlussadapter des dritten Ausführungsbeispiels an einem Fernglas festgelegt und in zwei unterschiedlichen Einstellungen des Adapterkörpers; und
- Fig. 10: in drei Darstellungen a) bis c) verschiedene Ansichten ein viertes Ausführungsbeispiel eines erfindungsgemäßen Anschlussadapters in einer dem zweiten, in Fig. 5 gezeigten Ausführungsbeispiel vergleichbaren Gestaltung, allerding mit zweigeteiltem und variabel verstellbarem Adapterkörper.

In den Figuren sind schematisch und keinesfalls maßstabsgerecht insgesamt vier mögliche Ausführungsbeispiele der Erfindung gezeigt. Diese Ausführungsbeispiele, die nachstehend anhand der Figuren beschrieben werden, dienen der weiteren Erläuterung der Erfindung, wobei die möglichen Ausgestaltungsformen nicht auf die gezeigten Ausführungsbeispiele beschränkt sind. Dem Fachmann werden selbstverständlich weitere mögliche Ausführungsformen präsent sein, die er vor dem Hintergrund der allgemeinen Beschreibung der Erfindung in ihrer gesamten Tragweite erkennen kann.

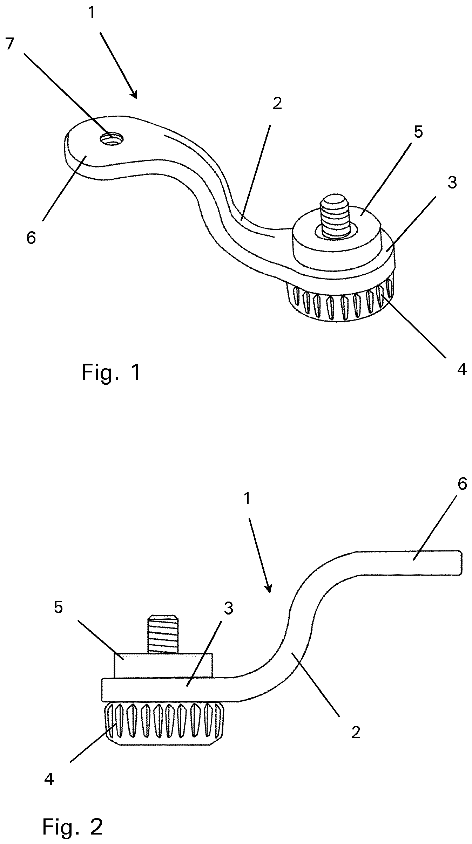

Ein erstes Ausführungsbeispiel eines erfindungsgemäßen Anschlussadapters ist in den Figuren 1 bis 4 gezeigt. Der dort gezeigte Anschlussadapter ist mit dem Bezugszeichen 1 bezeichnet. Er weist einen Adapterkörper 2 auf, der plattenförmig flach gebildet ist und in einem Längsschnitt einen S-förmigen Verlauf zeigt. An dem Adapterkörper 2 ist ein erster Verbindungsabschnitt 3 ausgeformt, der eben und plateauförmig gebildet ist. In diesem Verbindungsabschnitt 3 durchstößt eine Stativschraube 4 eine in dem Adapterkörper 2 eingebrachte Bohrung und ist an dem Adapterkörper 2 mittels einer auf die Stativschraube 4 aufgeschobenen Gummischeibe 5 unverlierbar gesichert. An einem dem ersten Verbindungsabschnitt 3 gegenüberliegenden Längsende des Adapterkörpers 2 ist ein zweiter Verbindungsabschnitt 6 ausgebildet. Auch dieser ist plateauförmig eben gebildet, wobei die Ebenenverläufe der jeweiligen Plateaus der Verbindungsabschnitte 3 und 6 im Wesentlichen parallel zueinander orientiert sind.

Wie insbesondere in Figur 1 zu erkennen ist, ist in dem Verbindungsabschnitt 6 ein Innengewinde 7 eingearbeitet. Dieses Innengewinde 7 ist in einer den Adapterkörper 2 im zweiten Verbindungsabschnitt 6 vollständig durchdringenden Bohrung geformt. Dieses Innengewinde 7 ist ein solches, in welches eine Standard-Stativschraube eingeschraubt werden kann. Dadurch, dass das Innengewinde 7 vollständig den Adapterkörper 2 durchdringt, kann eine Stativschraube in das Innengewinde 7 wahlweise von beiden Seiten eingeschraubt werden.

Die Gewindelängsachse des Innengewindes 7 und die Schraubengewindeachse der Stativschraube 4 verlaufen parallel zueinander. Zudem ist erkennbar, dass die Verbindungsabschnitte 3 und 6 bzw. die daran angeordneten Verbindungsmittel (Stativschraube 4 und Innengewinde 7) sowohl in einer Richtung parallel zu der Schraubengewindeachse der Stativschraube 4 als auch in einer Richtung senkrecht dazu versetzt sind. Dieser Versatz wird hier durch die S-Form des Adapterkörpers 2 erreicht.

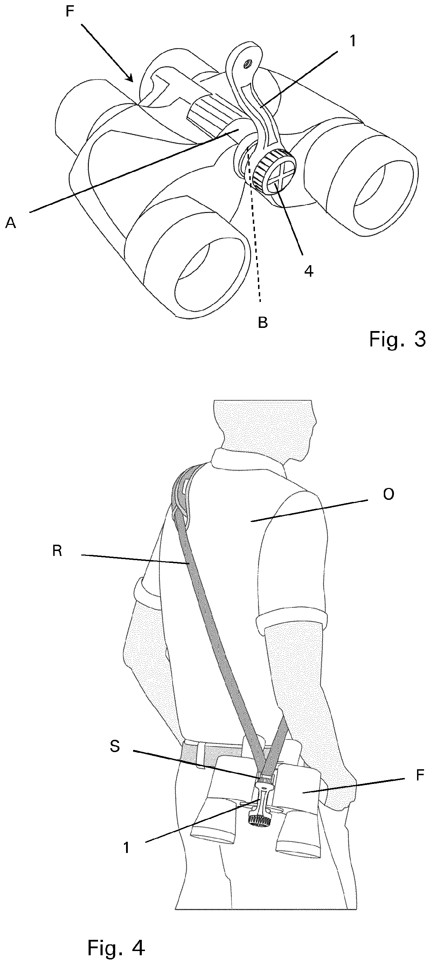

Der gezeigte Anschlussadapter 1 wird nun für den Gebrauch in der wie in Figur 3 gezeigten Weise in einer an einer Mittelachse A eines Fernglases F in Längsrichtung von einer Stirnseite her eingelassenen Stativgewindebuchse B festgelegt, indem die Stativgewindeschraube 4 dort eingeschraubt wird. Hierbei sorgt die Gummischeibe 5, die beim Einschrauben der Gewindeschraube 4 in die Stativgewindebuchse B zusammengepresst wird, für einen entgegen der Einschraubrichtung gerichteten Druck, welcher das Gewinde der Gewindeschraube 4 in der Stativgewindebuchse B verriegelt und ein unbeabsichtigtes Lösen verhindert. Um die Stativgewindeschraube 4 besser bedienen zu können, weist diese an ihrem Schraubenkopf einen gerändelten Rand auf. Zudem können, wie in der Figur 3 gezeigt, zum Beispiel kreuzartig gelegte schlitzförmige Vertiefungen in dem Schraubenkopf vorgesehen sein, in die zum Beispiel mit einer Münze oder einem ähnlichen Werkzeug eingegriffen werden kann, um so die Stativgewindeschraube 4 mithilfe eines solchen Hilfsmittels festziehen bzw. lösen zu können. Entsprechende Werkzeugansätze können natürlich auch andere Formen annehmen, wie z.B. die eines einfachen Schlitzes, oder die eines Ansatzes für klassisches Werkzeug, wie Schlitz- und Kreuzschraubendreher, Innensechskantschlüssel und dergleichen mehr. Insbesondere dann, wenn vorgesehen ist, dass die Stativgewindeschraube über ein Werkzeug festzulegen ist, kann auf eine wie in der Figur gezeigte Rändelung des Randes des Schraubenkopfes auch verzichtet werden.

In Figur 4 ist dann gezeigt, wie der wie in Figur 3 dargestellt an dem Fernglas F festgelegte Anschlussadapter 1 mit einem Anschlussstück, hier einer Stativschraube S, eines Trageriemens R, der quer über den Oberkörper O eines Tragenden geführt ist, festgelegt ist. In dieser Weise kann das Fernglas F, wie in Figur 4 gezeigt, auf Höhe der Hüfte des Tragenden bequem getragen und mitgeführt werden. Es kann, da das Anschlussstück in Form der Stativschraube S mit einer Bügelöse gleitend über den Trageriemen R geführt werden kann, leicht aus der in Figur 4 gezeigten Position durch Ergreifen mit einer Hand herausgeführt und vor das Gesicht gebracht werden, um dann durch das Fernglas hindurch ein gewünschtes Objekt beobachten zu können.

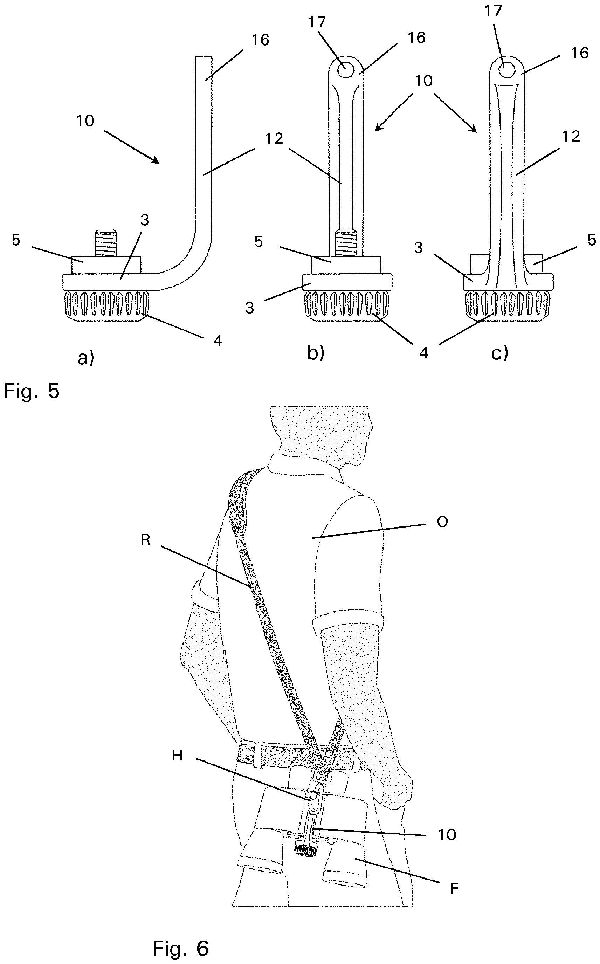

In den Figuren 5 a) bis c) und 6 ist ein zweites Ausführungsbeispiel eines erfindungsgemäßen Anschlussadapters gezeigt und dort mit dem Bezugszeichen 10 bezeichnet. Auch der Anschlussadapter 10 weist einen Adapterkörper 12 auf, der mit einem im Wesentlichen zu dem ersten Verbindungsabschnitt 3 des Anschlussadapters 1 nach dem ersten Ausführungsbeispiel identisch gebildeten ersten Verbindungsabschnitt 3 versehen ist. Auch dort ist eine Stativschraube 4 durch eine Öffnung geführt und mit einer über das Gewinde der Stativschraube 4 geführten Gummischeibe 5 unverlierbar gesichert. Allerdings ist die Form des auch hier flach und bandförmig gebildeten Adapterkörpers 12 des Anschlussadapters 10 gemäß diesem Ausführungsbeispiel abweichend von dem zuvor gezeigten Ausführungsbeispiel nicht S-förmig, sondern vielmehr L-förmig. An einem dem Verbindungsabschnitt 3 gegenüberliegenden Längsende des Adapterkörpers 12 befindet sich ein Verbindungsabschnitt 16, in dem ein Kopplungselement, hier eine Öse 17 in Form einer einfachen Bohrung durch den Adapterkörper 12, gebildet ist. Diese Öse 17 dient einer Verbindung des Anschlussadapters 10 mit einem alternativen Anschlussstück eines Trageriemens, wie sich insbesondere aus der Figur 6 ergibt. Dort ist in einer der Figur 4 vergleichbaren Darstellung gezeigt, wie der in gleicher Weise über die Stativschraube 4 mit der Gewindebuchse des Fernglas F verbundene Anschlussadapter 10 mit einem anderen Anschlussstück, das hier die Form eines Karabinerhakens H aufweist, eines Trageriemens R verbunden ist. Auch der hier gezeigte Trageriemen R wird quer über den Oberkörper O eines Nutzers getragen. Der Karabinerhaken H ist, wie die Figur 6 erkennen lässt, durch die Öse 17 hindurchgeführt und verschlossen und gesichert. Auf diese Weise ist hier also der Anschlussadapter 10 mit dem Trageriemen R verbunden. Das Fernglas F wird dabei wieder in der wie oben anhand der Figur 4 bereits beschriebenen Weise getragen und kann in gleicher Weise schnell einsatzbereit vor das Gesicht geführt werden, wenn es ein Objekt durch das Fernglas hindurch zu beobachten gilt. Es ist selbstverständlich klar, dass anstelle der Öse 17 in dem Verbindungsabschnitt 16 auch eine andere Form eines Kopplungselementes, z.B. ein Kugelkuppler, ein Schnappverbinder oder dergleichen angeordnet sein kann.

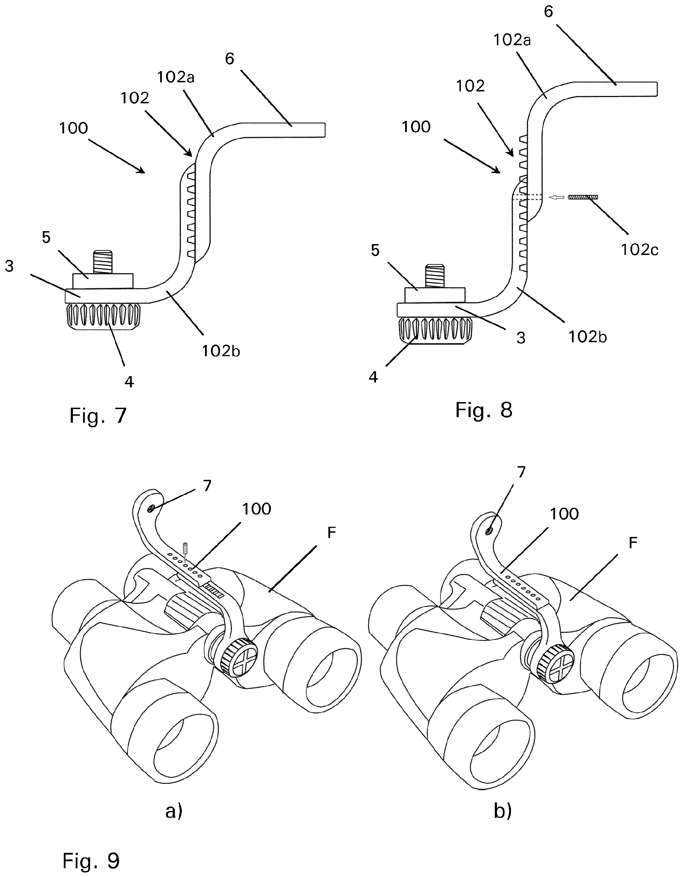

Ein drittes Ausführungsbeispiel eines erfindungsgemäßen Anschlussadapters ist in den Figuren 7, 8 und 9 a) und b) dargestellt. Das dort gezeigte Ausführungsbeispiel eines Anschlussadapters, der in den Figuren mit dem Bezugszeichen 100 bezeichnet ist, entspricht im Prinzip demjenigen gemäß dem ersten, in den Figuren 1 bis 4 gezeigten Ausführungsbeispiel. Auch hier ist ein Adapterkörper 102 vorgesehen, der S-förmige geschwungen verläuft, mit einem ersten Verbindungsabschnitt 3 und einen zweiten Verbindungsabschnitt 6, die plateauartig eben und in ihrer Ausrichtung parallel zueinander, jedoch versetzt verlaufen. Im ersten Verbindungsabschnitt 3 ist wiederum eine Stativschraube 4 unverlierbar festgelegt, indem diese durch eine Bohrung in dem Adapterkörper 102 hindurchgeführt und mit einer Gummischeibe 5 gesichert ist. Im zweiten Verbindungsabschnitt 6 ist (in den Figuren 7 und 8 nicht zu erkennen, dafür aber in den Figuren 9 a) und b) zu sehen) ein Innengewinde 7 in gleicher Weise, wie bei dem Ausführungsbeispiel gemäß Figur 1 bis Figur 4 gebildet. Das besondere und gegenüber dem ersten Ausführungsbeispiel andere an dem Anschlussadapter 100 nach dem dritten Ausführungsbeispiel ist, dass dessen Adapterkörper 102 nicht einstückig gebildet ist, sondern vielmehr in zwei Teilkörper 102a und 102b unterteilt ist, die lösbar miteinander in unterschiedlichen Positionen verbindbar sind, wie dies der Vergleich zwischen den Figuren 7 und 8 ausweist. Über eine ratschenartige Strukturierung sind nicht nur distinkte Positionen geschaffen, in denen die beiden Teilkörper 102a und 102b miteinander verbunden werden können. Diese Strukturierungen schaffen auch einen Formschluss im verbundenen Zustand. Zum Verbinden der beiden Teilkörper 102a und 100b wird zum Beispiel eine Madenschraube 102c eingesetzt, die in an unterschiedlichen Positionen in dem Teilkörper 102b vorgesehene Innengewinde eingeschraubt werden kann. So kann mit dem Anschlussadapter 100 eine Einstellung der Distanz zwischen den beiden Verbindungsabschnitt 3 und 6 in einer Richtung parallel zu der Schraubengewindeachse der Stativschraube 4 vorgenommen werden, um diesen Abstand individuell an die Form des mit dem Anschlussadapter 100 an einem Trageriemen anzuhängenden Fernglases F anpassen zu können, um also für das Fernglas F einen optimalen Anschlagspunkt einzustellen. Diese Möglichkeit ist in den Figuren 9a) und b) noch einmal graphisch dargestellt, welche den Anschlussadapter 100 in einer wie schon zuvor anhand der Figur 3 beschriebenen Festlegung an einem Fernglas F zeigen mit jeweils unterschiedlich eingestelltem Abstand der Verbindungsabschnitte 3 und 6. Dabei ist klarzustellen, dass die Möglichkeit einer Längenverstellung des Adapterkörpers 102 mit zwei Teilkörpern auch auf andere Weise erreicht werden kann als über eine Festlegung mittels der Madenschraube 102c. So kann ein Rastmechanismus vorgesehen sein, oder es kann auch eine (einmalige oder mehrmalige) Einstellung und Festlegung durch z.B. Verformen eines Abschnittes jedenfalls eines der Teilkörper 102a, b erfolgen oder dergleichen.

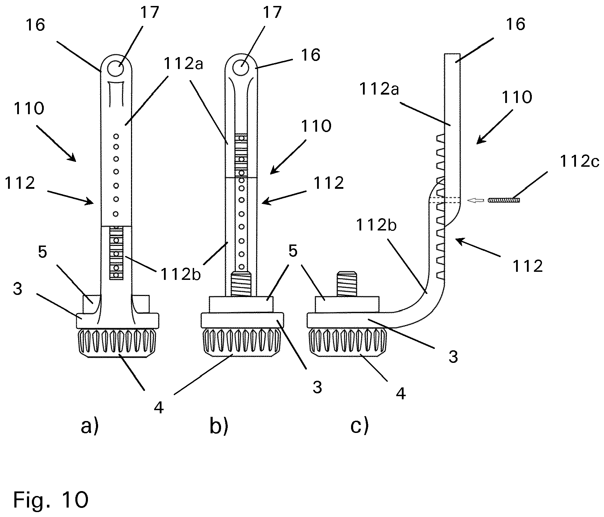

In Figur 10 ist schließlich ein viertes Ausführungsbeispiel der Erfindung dargestellt. Der dort gezeigte Anschlussadapter 110 entspricht im Wesentlichen demjenigen nach dem zweiten Ausführungsbeispiel, also dem in den Figuren 5a) bis c) und 6 dargestellten Anschlussadapter 10. Grundsätzlich ist der Anschlussadapter 110 auch hier wiederum analog aufgebaut zu dem Anschlussadapter 10 mit einem ersten Verbindungsabschnitt 3 und der daran festgelegten Stativgewindeschraube 4, die mit der Gummischeibe 5 unverlierbar gesichert ist und dem an einem anderen Längsende des L-förmig gebildeten Adapterkörpers 112 ausgebildeten zweiten Verbindungsabschnitt 16 mit dem Kopplungselement, hier erneut in Form einer darin geformten Öse 17. Auch hier ist nun, ähnlich wie in dem vorstehend beschriebenen dritten Ausführungsbeispiel der Adapterkörper 112 nicht einstückig, sondern wiederum aus zwei Teilkörpern 112a und 112b gebildet, die in unterschiedlichen Positionen relativ zueinander miteinander verbunden werden können, auch hier wiederum mit einer Madenschraube 112c gesichert. Auch in diesem gezeigten Ausführungsbeispiel dient die so gewonnene Verstellmöglichkeit einer Einstellung und Anpassung des Anschlagpunktes für die Aufhängung an einem Trageriemen an die Form und den Typ des mit dem Trageriemen zu tragenden Fernglases.

Aus der voranstehenden Beschreibung der Ausführungsbeispiele sind noch einmal die Vorteile und besonderen Merkmale des erfindungsgemäßen Anschlussadapters deutlich geworden. So ist insbesondere klar geworden, dass der erfindungsgemäße Anschlussadapter in seinem Kern der Ertüchtigung eines für das Transportieren von Kameras an sich bekannten Trageriemens nach der Ausgestaltung gemäß WO 2008/131135 A1 auch für das Tragen und Transportieren von Ferngläsern dient. Die unterschiedliche Ausgestaltung und Formgebung des Adapterkörpers und des zweiten Verbindungsabschnittes (einmal mit Innengewinde 7 für eine Stativschraube und einmal mit einer Öse 17) dienen dabei lediglich der Anpassung des ansonsten hinsichtlich seiner Gestaltung und seines Verwendungszweckes bzw. der technischen Wirkung gleich gebildeten Anschlussadapters an das spezifisch gebildete Anschlussstück des Trageriemens.

### Bezugszeichenliste

- 1: Anschlussadapter
- 2: Adapterkörper
- 3: erster Verbindungsabschnitt
- 4: Stativschraube
- 5: Gummischeibe
- 6: zweiter Verbindungsabschnitt
- 7: Innengewinde
- 10: Anschlussadapter
- 12: Adapterkörper
- 16: zweiter Verbindungsabschnitt
- 17: Öse
- 100: Anschlussadapter
- 102: Adapterkörper
- 102a, b: Teilkörper
- 102c: Madenschraube
- 110: Anschlussadapter
- 112: Adapterkörper
- 112a, b: Teilkörper
- 112c: Madenschraube
- A: Mittelachse
- F: Fernglas
- H: Karabinerhaken
- O: Oberkörper
- R: Trageriemen
- S: Stativschraube

## Patentansprüche

1. Anschlussadapter (1, 10, 100, 110) zum Verbinden eines Trageriemens (R) mit einem Fernglas (F) mit einem Adapterkörper (2, 12, 102, 112), der einen ersten Verbindungsabschnitt (3), in dem eine Stativschraube (4) zum Verbinden mit einer Stativbuchse (B) relativ zu dem Adapterkörper (2, 12, 102, 112) verdrehbar und mit einer Schraubengewindeachse entlang einer ersten Richtung orientiert angeordnet ist, und einen zweiten Verbindungsabschnitt (6, 16) mit Mitteln zum Verbinden mit einem an dem Trageriemen (R) angeordneten Anschlussstück (H, S) aufweist, wobei die Verbindungsabschnitte (3; 6, 16) in einer Richtung senkrecht zu der Schraubengewindeachse um ein erstes Abstandsmaß und in einer Richtung parallel zu der Schraubengewindeachse um ein zweites Abstandsmaß zueinander versetzt sind, **dadurch gekennzeichnet,**
i. **dass** der zweite Verbindungsabschnitt (6) ein mit einer parallel zu der Schraubengewindeachse verlaufenden oder relativ zu dieser um maximal 20° geneigten Gewindeachse gebildetes Innengewinde (7) zur Aufnahme einer Stativschraube (S) aufweist, oder
ii. **dass** der zweite Verbindungsabschnitt (16) ein Kopplungselement aufweist.

2. Anschlussadapter (1, 10, 100, 110) nach Anspruch 1, **dadurch gekennzeichnet, dass** der Adapterkörper (102, 112) aus wenigstens zwei Teilkörpern (102a, 102b; 112a, 112b) gebildet ist, von denen ein erster (102b, 112b) den ersten Verbindungsabschnitt (3) trägt und ein zweiter (102a, 112a) den zweiten Verbindungsabschnitt (6, 16) trägt, wobei die zwei Teilkörper (102a, 102b; 112a, 112b) miteinander in wenigstens zwei unterschiedlichen Positionen verbindbar sind, um so wenigstens eines der Abstandsmaße, erstes Abstandsmaß, bzw. zweites Abstandsmaß, variierbar einstellen zu können.

3. Anschlussadapter (1, 10, 100, 110) nach Anspruch 1, **dadurch gekennzeichnet, dass** der Adapterkörper (2, 12) durchgehend einstückig gebildet ist.

4. Anschlussadapter (1, 10, 100, 110) nach einem der vorhergehenden Ansprüche, **dadurch gekennzeichnet, dass** der erste Verbindungsabschnitt (3) in einem ersten ebenen Plateaubereich angeordnet ist und dass der zweite Verbindungsabschnitt (6, 16) in einem zweiten ebenen Plateaubereich angeordnet ist, wobei die Plateaubereiche in ihrer jeweiligen ebenen Erstreckung im Wesentlichen parallel zueinander orientiert sind.

5. Anschlussadapter (1, 10, 100, 110) nach einem der vorhergehenden Ansprüche, **dadurch gekennzeichnet, dass** eine Oberfläche des Adapterkörpers (2, 102) zwischen dem ersten (3) und dem zweiten (6) Verbindungsabschnitt einen in einem Querschnitt S-förmig gekrümmten Verlauf hat.

6. Anschlussadapter (1, 10, 100, 110) nach einem der vorhergehenden Ansprüche, **dadurch gekennzeichnet, dass** der Adapterkörper (2, 12, 102, 112) bandförmig flach gebildet ist.

7. Anschlussadapter (1, 10, 100, 110) nach einem der vorhergehenden Ansprüche, **dadurch gekennzeichnet, dass** der Adapterkörper (2, 12, 102, 112) aus einem Kunststoff gebildet ist.

8. Anschlussadapter (1, 10, 100, 110) nach einem der Ansprüche 1 bis 6,
**dadurch gekennzeichnet, dass** der Adapterkörper (2, 12, 102, 112) aus einem Metall gebildet ist.

9. Anschlussadapter (1, 10, 100, 110) nach einem der vorhergehenden Ansprüche, **dadurch gekennzeichnet, dass** die Stativschraube (4) in dem ersten Verbindungsabschnitt (3) an dem Adapterkörper (2, 12, 102, 112) unverlierbar festgelegt ist.

10. Anschlussadapter (1, 100) nach einem der vorhergehenden Ansprüche, soweit diese auf die Alternative i. in Anspruch 1 bezogen sind, **dadurch gekennzeichnet, dass** das Innengewinde (7) in dem zweiten Verbindungsabschnitt (6) diesen zweiten Verbindungsabschnitt (6) in einer solchen Weise durchragend ausgebildet ist, dass von beiden offenen Seiten des Innengewindes (7) her eine Stativschraube (S) in dieses eingeschraubt werden kann.

11. Anschlussadapter (10, 110) nach einem der Ansprüche 1 bis 10, soweit diese auf die Alternative ii. in Anspruch 1 bezogen, sind **dadurch gekennzeichnet, dass** das Kopplungselement eine Öse (17) ist.

12. Anschlussadapter (1, 10, 100, 110) nach einem der vorhergehenden Ansprüche, **dadurch gekennzeichnet, dass** das erste Abstandsmaß 5 mm bis 100 mm beträgt.

13. Anschlussadapter (1, 10, 100, 110) nach einem der vorhergehenden Ansprüche, **dadurch gekennzeichnet, dass** das zweite Abstandsmaß 10 mm bis 500 mm beträgt.
